# EUROPEAN PATENT SPECIFICATION

(11) **EP 3 186 054 B1**
(45) Date of publication and mention of the grant of the patent: **12.08.2020**
(21) Application number: 15835356.5
(22) Date of filing: 18.09.2015
(51) Int. Cl.: B29C 41/08, C04B 35/52, B28B 1/30, B29C 41/22

(54) **PROCESS FOR MAKING CARBON ARTICLES BY THREE DIMENSIONAL PRINTING**
VERFAHREN ZUR HERSTELLUNG VON KOHLENSTOFFARTIKELN DURCH DREIDIMENSIONALES DRUCKEN
PROCÉDÉ DE FABRICATION D'ARTICLES EN CARBONE PAR IMPRESSION TRIDIMENSIONNELLE

(43) Date of publication of application: 05.07.2017
(73) Proprietor: The Exone Company, North Huntingdon, PA 15642 (US)
(72) Inventor: BLACKER, Jesse, M., St. Clairsville, OH 43950 (US); PLUCINSKI, Janusz, Glendale, WV 26038 (US)
(74) Representative: Viering, Jentschura & Partner mbB Patent- und Rechtsanwälte
(86) International application number: PCT/US2015/050862
(87) International publication number: WO 2016/033616

(56) References cited:
- WO-A2-2015/038260
- US-A1- 2010 201 039
- US-A1- 2010 237 531
- US-A1- 2012 094 175
- US-B1- 8 741 194
- MOON ET AL.: 'Fabrication of functionally graded reaction infiltrated SiC-Si composite by three- dimensional printing process' MATERIALS SCI. AND ENG. vol. A298, 2001, pages 110 - 119, XP055272634 Retrieved from the Internet: <URL:http://nfml.yonsei.ac.kr/gnuboard4/dat a/file/publication/2776907207_kNZ217rq_2001 - 4_Fabrication_of_functionally_graded_reacti on_infiitrated_SiC-Si_composite_by_three- dimensional_printing_3DPE284A2_process.pdf> [retrieved on 2015-11-12]

## Description

### Background

Field of the Invention: The present invention relates to a process for making carbon articles by three-dimensional printing.

Background of the Art: Carbon is used to make components for use in many aerospace, chemical, power, and industrial applications. Conventionally, carbon based articles are made by machining a large block of carbon to the desired shape. This subtractive manufacturing method results in a significant amount of material loss in creating the article. Additionally, subtractive manufacturing methods have limited geometries available for creating the article.

Carbon materials, such as graphite or coke, can be extremely difficult materials to use in forming articles using a binder jetting technique. Improvements are desired for making carbon articles by three-dimensional printing, especially those improvements which would readily form near net shape carbon articles from a binder jetting technique.

### Summary of the Invention

The present invention provides a process for making a carbon article according to claim 1. Further embodiments of the process are described in the dependent claims. The present invention includes methods for making carbon articles using the three-dimensional binder jetting printing process. Accordingly, the present invention presents methods which include the steps of providing a carbon powder; depositing a layer of the carbon powder; ink-jet depositing a binder onto the layer in a pattern that corresponds to a slice of an article; repeating the previous two steps for additional layers of the powder and additional patterns, each of which additional patterns corresponds to an additional slice of the article until a powder version of the article is completed.

### Brief Description of the Drawings

The present invention will be better understood by reference to the attached drawings. It is to be understood, however, that the drawings are designed for the purpose of illustration only and not as a definition of the limits of the present invention.

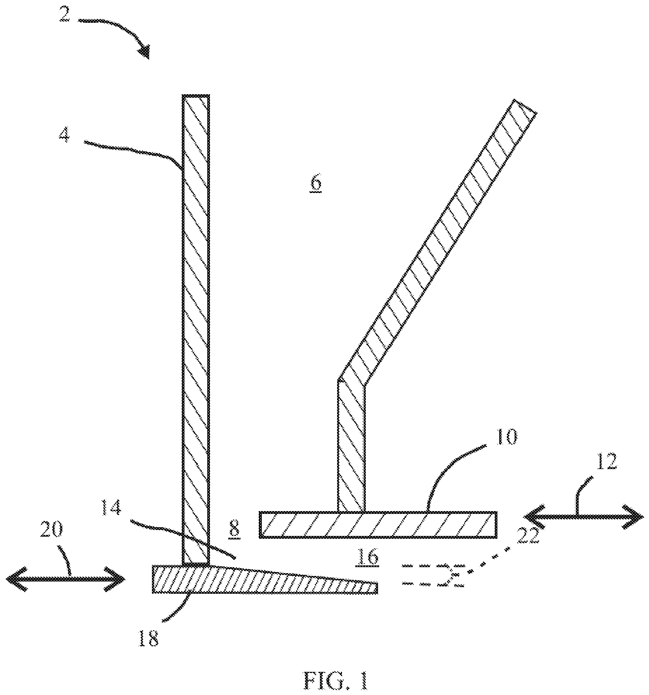

FIG. 1 is a schematic showing a vertical cross section of the bottom section of a powder dispenser.

### Description of Preferred Embodiments

In this section, some preferred embodiments of the present invention are described in detail sufficient for one skilled in the art to practice the present invention without undue experimentation. It is to be understood, however, that the fact that a limited number of preferred embodiments are described herein does not in any way limit the scope of the present invention as set forth in the claims. It is to be understood that whenever a range of values is described herein or in the claims that the range includes the end points and every point therebetween as if each and every such point had been expressly described. Unless otherwise stated, the word "about" as used herein and in the claims is to be construed as meaning the normal measuring and/or fabrication limitations related to the value which the word "about" modifies. Unless expressly stated otherwise, the term "embodiment" is used herein to mean an embodiment of the present invention.

The basic three-dimensional printing process was developed in the 1990's at the Massachusetts Institute of Technology and is described in several United States patents, including the following United States patents: 5,490,882 to Sachs et al., 5,490,962 to Cima et al., 5,518,680 to Cima et al., 5,660,621 to Bredt et al., 5,775,402 to Sachs et al., 5,807,437 to Sachs et al., 5,814,161 to Sachs et al., 5,851,465 to Bredt, 5,869,170 to Cima et al., 5,940,674 to Sachs et al., 6,036,777 to Sachs et al., 6,070,973 to Sachs et al., 6,109,332 to Sachs et al., 6,112,804 to Sachs et al., 6,139,574 to Vacanti et al., 6,146,567 to Sachs et al., 6,176,874 to Vacanti et al., 6,197,575 to Griffith et al., 6,280,771 to Monkhouse et al., 6,354,361 to Sachs et al., 6,397,722 to Sachs et al., 6,454,811 to Sherwood et al., 6,471,992 to Yoo et al., 6,508,980 to Sachs et al., 6,514,518 to Monkhouse etal., 6,530,958 to Cima et al., 6,596,224 to Sachs et al., 6,629,559 to Sachs et al., 6,945,638 to Teung et al., 7,077,334 to Sachs et al., 7,250,134 to Sachs et al., 7,276,252 to Payumo et al., 7,300,668 to Pryce et al., 7,815,826 to Serdy et al., 7,820,201 to Pryce et al., 7,875,290 to Payumo et al., 7,931,914 to Pryce et al., 8,088,415 to Wang et al., 8,211,226 to Bredt et al., and 8,465,777 to Wang et al.

In essence, three-dimensional printing involves the spreading of a layer of a particulate material and then selectively inkjet-printing a fluid onto that layer to cause selected portions of the particulate layer to bind together. This sequence is repeated for additional layers until the desired part has been constructed. The material making up the particulate layer is often referred as the "build material" or the "build material powder" and the jetted fluid is often referred to as a "binder," or in some cases, an "activator." During the process, the portions of the powder layers which are not bonded together with the binder form a bed of supporting powder around the article or articles which are being made, i.e. a "powder bed" or "build bed."

Post-build processing of the three-dimensionally printed article, i.e., the powder version of the article, is often required in order to strengthen and/or densify the part. Often, the first post-processing step will be to heat the powder version of the article while it is still supported by the powder bed to cure the binder, followed by a second step of removing the powder version of the article from the powder bed, and a third step of heat treating the powder version of the article to sinter together the powder particles of the powder version or to affect changes in the binder. WO 2015/038260 A2 discloses a method for making a three dimensional article comprising carbon.

### Carbon Powder Printing

In embodiments, a carbon powder is provided in quantities sufficient to produce the article or articles desired, taking into account the three- dimensional printing machine that is to be used and the size of the powder bed that will surround the powder version of the article. The first layer of carbon powder is spread onto a vertically indexible platform. An image or pattern corresponding to a first layer of the article or articles to be built may be imparted to this layer by inkjet printing binder onto this layer or one or more additional layers may be deposited before the first pattern is imparted. The process of depositing a powder layer followed by imparting an additional image which corresponds to an additional slice of the article or article is continued until the powder version of the article or articles are completed. For conciseness, the powder version of an article is often referred to herein as the "printed article".

In embodiments in which the binder requires curing in order to provide the printed article with strength sufficient for handling, a curing process is conducted on the printed article. Whether or not a curing step is used, the printed article is subsequently removed from the powder bed and cleaned of all unwanted adhering or captured powder. The printed article may then be further heat treated to cure the binder or heat treated to carbonize or graphitize the printed article.

### Curing The Printed Article

If a step of heating is desired for curing the binder, the heating step involves heating the printed article to a temperature and for a time sufficient to cure the binder. In many embodiments, heating to a temperature above 160 C for at least about 60 minutes is often sufficient to cure many organic polymeric binders. The time and temperature required to cure the binder will vary depending on the composition of the particular binder used and is generally well understood by those skilled in the art. The step of curing the binder may be performed in an inert, non-reactive atmosphere, such as argon or nitrogen. Often of the cure temperatures for many organic binders are low enough that the curing step may take place in air without significantly affecting the carbon particles of the printed article. In general, the lower the cure temperature the longer the time required to cure the binder to a degree that the article exhibit physical properties such that it can be handled without significant damage or deformation to the article. Upon curing of the binder the process yields a cured printed article. The cured printed article has a binder content ranging from 1% to 5% by weight. This minimal amount of binder used to form near-net shape carbon printed articles significantly reduces material waste and improves the economics and efficiency of producing carbon articles. This is an advancement over many other carbon forming techniques that use significantly higher binder contents to form bulk shapes and are then machined to desired shapes. In certain embodiments the density of the cured printed article, i.e., green density, may range from about 0.75 g/cc to about 0.9 g/cc.

The heat treating steps, especially for carbonization and/or graphitization, are preferably done in a controlled atmosphere which essentially excludes the presence of air. The atmosphere may be any atmosphere which is suitable for heat treating carbon, e.g. argon, nitrogen, etc. During the heating of the printed article or articles, accommodations may be made for the carbonization or graphitization of the printed article or articles.

### Printed Article Carbonization

In some embodiments, further heat treating of the cured printed article may be optionally performed to carbonize one or more materials in the cured printed article to produce a carbonized printed article. The term "carbonization" refers to the conversion of organic material into carbon or carbon containing residue by pyrolysis. A carbonization step may include heating the cured printed article to a temperature of at least about 500 C, preferably at least about 700 C. In some embodiments, depending on the source of carbon used to produce the printed article, carbonization temperatures may range from about 500 C to about 900 C. The time required for carbonization is variable depending on the composition of the material and the size and shape of the printed carbon article. In many embodiments, holding the printed article at carbonization temperatures for 1 to 2 hours is sufficient to produce a carbonized printed article.

If the binder utilized to form the printed carbon article is carbonizable and the carbon powder used in the printing steps are either carbonizable or already carbonized, the carbonization step will produce a near net shape carbonized printed article. This is a significant improvement in the art over the primary way to form carbonized shaped articles is to start with the a solid block of the desired carbon material and machine away the material to form the desired shape. This subtractive method produces a significant amount of material waste, upwards of 75% waste for some parts, and is limited to certain geometries. By printing the desired geometry with a carbonizable or carbonized carbon powder using a carbonizable binder, followed by carbonization of the printed article, a near net shape carbonized printed article is produced very little lost carbon material and in virtually limitless geometric configurations. In certain embodiments the density of the carbonized printed article may range from about 0.75 g/cc to about 0.9 g/cc.

### Printed Article Graphitization

Still further, the printed carbon article may be cured as described above and heated to graphitization temperatures of at least about 2500 C, preferably of at least about 3000 C. The time required for graphitization is variable depending on the material and the size and shape of the printed carbon article. In many embodiments, holding the printed carbon article at graphitization temperatures for 1 to 2 hours is sufficient to produce a graphitized printed article.

The step of graphitization provides the ability to print a carbon article using a non-graphitic carbon powder and binder, and subsequently graphitize the printed article to directly produce a near net shape graphitic printed article, provided that the starting non-graphitic carbon powder is in a form that can be graphitized. Similarly, a graphite or graphitic carbon powder may be used to form a printed article, followed by subsequent graphitization of the binder to produce a near net shape graphitic printed article. These methods for forming a graphitic article are a significant improvement over the traditional methods or forming graphitic articles that rely on machining graphite to produce the desired part. The subtractive machining method produces a significant amount of wasted graphite material and is limited to certain geometries. By printing the desired geometry with the carbon powder, followed by graphitization, a near net shape graphitic printed article is produced with very little lost graphitic material and can be formed in virtually limitless geometric configurations. In certain embodiments the density of the graphitized printed article may range from about 0.75 g/cc to about 1.1 g/cc. In additional embodiments, the density may range from about 0.9 g/cc to about 1.1 g/cc.

### Carbon Powder Sintering

Depending on the carbon powder used to form the printed article, the carbon particles of the carbon powder in the printed article may not sinter to an appreciable degree. For example, if the carbon powder does not soften upon heating, little to no sintering is expected to occur with adjacent carbon particles upon heating of the printing article. Many graphite or graphitic materials do not soften to an appreciable degree when exposed to graphitization temperatures, and thus do not sinter significantly upon heating to graphitization temperatures. However, carbon powders that soften upon heating to carbonization or graphitization temperatures will sinter together to some degree when heated. As a general guide, the higher the volatile matter content of the carbon powder, the greater degree of softening of the carbon powder upon heating.

### Carbon Powder

As used herein, "carbon powder" in its singular or plural forms refers to powdered forms of natural graphite, synthetic graphite, glassy carbon, amorphous carbon, coal, petroleum coke, petroleum pitch, or other similar carbonaceous powders that have a higher carbon content than organic matter content. Petroleum cokes and pitches may include green, carbonized, or graphitized forms.

Certain properties of the carbon powder affect the ability to print the printed article. These properties include the average particle size, the particle size distribution, and the shape of the particles of the carbon powder.

With respect to the average particle size, in embodiments, it is preferable that the average particle size of the powder be less than about 200 microns and greater than about 20 microns; more preferably that it range from about 20 micron to about 150 microns; and in some embodiments preferably that it range from about 20 microns to 75 microns. In some embodiments, the particle size distribution preferably exhibits a distribution in which greater than about 80% of the particles exhibit a size within 20% of the average particle size. In further embodiments the distribution of particle sizes follow a Gaussian type distribution where about 95% of the particles exhibit a particle size within 20% of the average particle size. In additional embodiments, the particle size distribution may exhibit a d50 of about 75 microns, d10 of 45 microns, and a d90 of 150 microns. The powder distribution should contain no particles having a size which is greater than the layer thickness that is to be used in the three-dimensional printing process, and more preferably no greater than half the layer thickness used in the three dimensional printing process.

The shape of the carbon particles in the carbon powder is also an important variable for the three dimensional printing of carbon articles. In general, it is preferred that the particles be relatively smooth and relatively spherical. Particles that have extremely sharp edges and exhibit extreme elongation along one liner axis are not desired.

### Binder

The binders used in the inkjet printing step may include a variety of binder materials. Importantly the binders must be able to be applied by the inject mechanism used by the printing equipment. Physical properties of the binder composition can typically be adjusted with appropriate solvents and surfactants to meet the physical requirements of the particular inkjet head or mechanism being used. The binders used in the present invention may be generally grouped into two categories: organic binders and inorganic binders. Organic binders are those binders in which substantially all of the contents of the binder left behind after the curing step, contain material components that will carbonize during the carbonization step. The organic binders may include but are not limited to phenols, furan, starch, sugar, polyvinylpyrolydine, and other similar organic binders. Inorganic binders are those binders that contain materials that will not carbonize upon heating to carbonization temperatures. The inorganic binders may include, but are not limited to, sodium silicate, and other suitable inorganic binders. Inorganic binders may be suitable if the inorganic material content is of little or no importance or has no significant negative effect on the intended use of the final printed article.

Optionally, the binders may include nanoparticle additives. The additive and binder combination needs to exhibit properties that are suitable for the ink jetting mechanism to apply the binder and additive during the printing process. Preferably, the nanoparticle additives may include carbon containing nanoparticles such as fullerenes, nanotubes, nanoparticles, and other similar carbon containing nanoparticles. Further, pitch material may be dissolved in appropriate organic solvents and used as a carbon additive in the binder. In some embodiments, pitch maybe used as a binder for binding the carbon particles together in the printing process.

### Depositing Carbon Powder

The powders may be deposited as layers using conventional spreading mechanisms. However, in some embodiments, there may be a tendency of the powder to poorly spread into uniform layers. In such cases, it is preferred to use a powder dispenser having a beveled foot member in conjunction with a counter-rotating roller to smooth out the powder into a uniform layer. The roller and the powder dispenser may be supported by a common carriage or by separate carriages for moving them across the area on which the powder layer is to be spread. Preferably, the roller is attached to the powder dispenser. FIG. 1 schematically shows a vertical cross section of the bottom section of such a powder dispenser, sans roller.

Referring to FIG. 1, the powder dispenser **2** is movably supported by a carriage (not shown) for selectively moving it above and across a powder bed (not shown). The powder dispenser **2** includes a tapered hopper **4** having a reservoir section **6** for receiving and holding a predetermined amount of the powder that is to be deposited. The lower portion of the hopper **4** includes an adjustable throat **8,** the width of which is selectively determined by the position of a fixedly adjustable plate **10.** The plate **10** is movably supported by supporting slots at its ends and its center (not shown) which are operably connected to the hopper **4.** The plate **10** may be selectively moved inward or outward (as indicated by the arrow **12)** to adjust the width of the throat **8** and then releaseably locked into place by a locking mechanism (not shown). The hopper **4** also has a powder dispensing section **14.** The dispensing section **14** has a mouth **16** which substantially extends along the width of the hopper **4** and a beveled bottom foot or plate **18** which helps to define the lower edge of the mouth **16.** The bottom plate **18** is supported by unshown connecting means to the hopper **4** so as to be lockably positionable in the directions of arrow **20** so as to controllably adjust the distance the powder travels across its top face and also the opening height of the mouth **16.** Preferably, the plate **10** is also adapted to be moved upward or downward so as to adjust the opening height of mouth **10.** The bevel angle **22** which the top face of the bottom plate **18** makes from the horizontal is within the range of 5 to 45 degrees, and more preferably within the range of 5 to 25 degrees, and even more preferably within the range of 10 to 15 degrees. Preferably, the bottom plate **18** is adapted to be easily interchangeable so that a bottom plate **18** having the desired bevel angle for a given powder can be interchanged with one having a less desirable bevel angle.

During operation of the powder dispenser **2,** powder is loaded into and stored within the reservoir **6** of the hopper **4.** The powder flows down through the throat **8** and builds up onto the top of the bottom plate **18** where it takes on an angle of repose and stops flowing. When a vibration is applied to the hopper by a vibration means (not shown), the powder begins to flow out through the mouth **16** and continues flowing while the vibrations continue. The powder deposition rate can be controlled by adjusting the vibration amplitude and frequency, the width of the throat **8,** and the mouth **16** opening height. In some embodiments, one or more of these control features are adapted to be remotely or automatically controlled to achieve a desired deposition rate. The deposition rate may be measured by the use of sensors which detect weight of the hopper or by other means so that a feedback loop can be established to maintain or achieve a desired deposition rate. In some embodiments, a portion of the hopper **4** is adapted to contact the deposited powder to smooth and/or compact it as the layer is being formed.

The packing density of the powder that has been deposited in the build box may be expressed as a percentage of apparent density of the powder in the powder bed vs. the tap density of the powder. Using this definition for packing density, the packing density is greater than 40%, more preferably greater than 50%, and still more preferably greater than 60%.

Depending upon variables such as the size, shape, and density of the particles in the carbon powder, the type and amount of binder used during printing, printed articles may exhibit a printed density ranging from about 0.5 g/cc to about 1.2 g/cc. In embodiments, printed articles exhibit a printed density greater than about 0.7 g/cc, in other embodiments greater than about 0.9 g/cc, in still other embodiments greater than about 1.0 g/cc.

### EXAMPLES

### Example 1 - Printed Carbon Article from Green Coke Particles

The carbon powder used for printing was a green petroleum based fluid coke (Asbury Carbons) that had been heat treated at 400-600C. The particle size and distribution of the green petroleum based fluid coke was d50 of 75 micron, d10 of 45 micron, and a d90 of 150 micron. The particle morphology was generally spherical. The powder exhibited an electrical resistivity of 2500 ohm-cm and had a high amount of organic matter. The surface area of the powder was 25-30 m²/g.

Printing was performed using an M-Flex binder jetting system from The ExOne Company. The binder used was a polymer-based PVP binder in an di-ethylene glycol carrier commercially available from The ExOne Company. Printing was performed using 150 micron layer thickness with a combination counter-rotating roller or recoater.

After the printing process was completed the carbon article was cured at 250C for 1 hour. After curing, the carbon article exhibited sufficient green strength to be handled for additional post processing by either calcining or graphitizing. Calcining and graphitizing resulted in appreciable shrinkage.

### Example 2 - Printed Carbon Article from Calcined Coke Particles

The carbon powder used for printing was a calcined petroleum based fluid coke (Asbury Carbons) that had been heat treated at 900-1100C. The particle size and distribution of the green petroleum based fluid coke was d50 of 75 micron, d10 of 45 micron, and a d90 of 150 micron. The particle morphology was generally spherical. The powder exhibited an electrical resistivity of 0.2 ohm-cm and had a negligible amount of organic matter. The surface area of the powder was 20-40 m²/g.

Printing was performed using an M-Flex binder jetting system from The ExOne Company. The binder used was a polymer-based PVP binder in an di-ethylene glycol carrier commercially available from The ExOne Company. Printing was performed using 150 micron layer thickness with a combination counter-rotating roller or recoater.

After the printing process was completed the carbon article was cured at 250C for 1 hour. After curing, the carbon article exhibited sufficient strength to be handled for additional post processing by either heating to calcining or graphitizing temperatures. Calcining and graphitizing resulted in no appreciable shrinkage.

### Example 3 - Printed Carbon Article from Graphitized Coke Particles

The carbon powder used for printing was a graphitized petroleum based fluid coke (Asbury Carbons) that had been heat treated at 2400-3000C. The particle size and distribution of the green petroleum based fluid coke was d50 of 75 micron, d10 of 45 micron, and a d90 of 150 micron. The particle morphology was generally spherical. The powder exhibited an electrical resistivity of 0.05 ohm-cm and had no appreciable amount of organic matter. The surface area of the powder was <1 m²/g.

Printing was performed using an M-Flex binder jetting system from The ExOne Company. The binder was a polymer-based PVP binder in an di-ethylene glycol carrier commercially available from The ExOne Company. Printing was performed using 150 micron layer thickness with a combination counter-rotating roller or recoater.

After the printing process was completed the carbon article was cured at 250C for 1 hour. After curing, the carbon article exhibited sufficient strength to be handled for additional post processing by either heating to calcining or graphitizing temperatures. Calcining and graphitizing resulted in no appreciable shrinkage.

## Claims

1. A process for making a carbon article comprising the steps of:
(a) providing a carbon powder;
(b) depositing a layer of the powder, wherein the step of depositing a layer of powder provides a powder packing density of at least 40%;
(c) ink-jet depositing a binder onto the layer in a pattern that corresponds to a slice of the article;
(d) repeating the steps (b) and (c) for additional layers of the powder and additional patterns, each of which additional patterns corresponds to an additional slice of the article, until a powder version of the article is completed; and
(e) curing the powder version of the article at a temperature at which at least a portion of the binder cures, wherein the cured printed article has a binder content ranging from 1% to 5% by weight.

2. The method of claim 1, wherein the carbon powder is selected from the group consisting of natural graphite, synthetic graphite, glassy carbon, amorphous carbon, coal, petroleum coke, petroleum pitch.

3. The method of claim 1, wherein the binder in an organic binder.

4. The method of claim 1, wherein the powder has an average particle size ranging from 20 microns to 150 microns.

5. The method of claim 1, wherein the density of the cured printed article ranges from 0.75 g/cc to 0.9 g/cc.

6. The method of claim 1, further comprising the step of:
(f) carbonizing the cured printed article at a temperature at which at least a portion of the printed article carbonizes.

7. The method of claim 1, further comprising the step of:
(f) graphitizing the cured printed article at a graphitization temperature of at least 2500°C at which at least a portion of the printed article graphitizes.

8. The method of claim 7, wherein the carbon powder is non-graphitic powder.

9. The method of claim 1, wherein the carbon powder used in the printing steps is carbonizable or carbonized and the binder utilized to form the printed carbon article is carbonizable, the method further comprising the step of:
(f) carbonizing the cured printed article at a temperature at which at least a portion of the printed article carbonizes.

## Patentansprüche

1. Verfahren zum Herstellen eines Kohlenstoffgegenstands, aufweisend die Schritte:
(a) Bereitstellen eines Kohlenstoffpulvers;
(b) Auftragen einer Schicht des Pulvers, wobei der Schritt des Auftragens einer Schicht des Pulvers eine Pulverpackungsdichte von zumindest 40% bereitstellt;
(c) Tintenstrahlauftragen eines Binders auf die Schicht in einem Muster, das einem Schnitt des Gegenstands entspricht;
(d) Wiederholen der Schritte (b) und (c) für zusätzliche Schichten des Pulvers und zusätzliche Muster, wobei jedes zusätzliche Muster einem zusätzlichen Schnitt des Gegenstands entspricht, bis eine Pulverversion des Gegenstands fertiggestellt ist; und
(e) Härten der Pulverversion des Gegenstands bei einer Temperatur, bei der zumindest ein Teil des Binders härtet, wobei der gehärtete gedruckte Gegenstand einen Binderanteil im Bereich von 1 Gewichts-% bis 5 Gewichts-% hat.

2. Verfahren nach Anspruch 1, wobei das Kohlenstoffpulver ausgewählt ist aus der Gruppe bestehend aus natürlichem Graphit, synthetischem Graphit, glasartigem Kohlenstoff, amorphem Kohlenstoff, Kohle, Petrolkoks, Pech.

3. Verfahren nach Anspruch 1, wobei der Binder ein organischer Binder ist.

4. Verfahren nach Anspruch 1, wobei das Pulver eine durchschnittliche Partikelgröße im Bereich von 20 Mikrometer bis 150 Mikrometer hat.

5. Verfahren nach Anspruch 1, wobei die Dichte des gehärteten gedruckten Gegenstands im Bereich von 0,75 g/ccm bis 0,9 g/ccm ist.

6. Verfahren nach Anspruch 1, ferner aufweisend den Schritt:
(f) Karbonisieren des gehärteten gedruckten Gegenstands bei einer Temperatur, bei der zumindest ein Abschnitt des gedruckten Gegenstands karbonisiert.

7. Verfahren nach Anspruch 1, ferner aufweisend den Schritt:
(f) Graphitisieren des gehärteten gedruckten Gegenstands bei einer Graphitisierungstemperatur von zumindest 2500°C, bei der zumindest ein Abschnitt des gedruckten Gegenstands graphitisiert.

8. Verfahren nach Anspruch 7, wobei das Kohlenstoffpulver nicht-graphitisches Pulver ist.

9. Verfahren nach Anspruch 1, wobei das Kohlenstoffpulver, das in den Druckschritten verwendet wird, karbonisierbar oder karbonisiert ist und der Binder, der zum Formen des gedruckten Kohlenstoffgegenstands verwendet wird, karbonisierbar ist, das Verfahren ferner aufweisend den Schritt:
(f) Karbonisieren des gehärteten gedruckten Gegenstands bei einer Temperatur, bei der zumindest ein Abschnitt des gedruckten Gegenstands karbonisiert.

## Revendications

1. Un procédé de fabrication d'un article en carbone comprenant les étapes suivantes consistant à :
(a) fournir une poudre de carbone ;
(b) déposer une couche de la poudre, l'étape consistant à déposer une couche de la poudre procurant une densité de tassement de la poudre d'au moins 40% ;
(c) déposer à jet d'encre un liant sur la couche selon un motif correspondant à une tranche de l'article ;
(d) répéter les étapes b) et c) pour des couches supplémentaires de la poudre et des motifs supplémentaires, chaque motif supplémentaire correspondant à une tranche supplémentaire de l'article, jusqu'à ce qu'une version en poudre de l'article soit complétée ; et
(e) durcir la version en poudre de l'article à une température à laquelle au moins une partie du liant durcit, l'article imprimé durci ayant une teneur en liant allant de 1% à 5% en poids.

2. Le procédé selon la revendication 1, dans lequel la poudre de carbone est choisie dans le groupe constitué par le graphite naturel, le graphite synthétique, le carbone vitreux, le carbone amorphe, le charbon, le coke de pétrole, le brai de pétrole.

3. Le procédé selon la revendication 1, dans lequel le liant est un liant organique.

4. Le procédé selon la revendication 1, dans lequel la poudre présente une taille moyenne de particules allant de 20 microns à 150 microns.

5. Le procédé selon la revendication 1, dans lequel la densité de l'article imprimé durci va de 0,75 g/cc à 0,9 g/cc.

6. Le procédé selon la revendication 1, comprenant en outre l'étape suivante consistant à :
(f) carboniser l'article imprimé durci à une température à laquelle au moins une partie de l'article imprimé se carbonise.

7. Le procédé selon la revendication 1, comprenant en outre l'étape suivante consistant à :
(f) graphitiser l'article imprimé durci à une température de graphitisation d'au moins 2500°C à laquelle au moins une partie de l'article imprimé se graphitise.

8. Le procédé selon la revendication 7, dans lequel la poudre de carbone est une poudre non graphitique.

9. Le procédé selon la revendication 1, dans lequel la poudre de carbone utilisée dans les étapes d'impression est carbonisable ou carbonisée et le liant utilisé pour former l'article en carbone imprimé est carbonisable, le procédé comprenant en outre l'étape suivante consistant à :
(f) carboniser l'article imprimé durci à une température à laquelle au moins une partie de l'article imprimé se carbonise.
